# EUROPEAN PATENT SPECIFICATION

(11) **EP 3 293 991 B1**
(45) Date of publication and mention of the grant of the patent: **17.02.2021**
(21) Application number: 17189924.8
(22) Date of filing: 07.09.2017
(51) Int. Cl.: H04W 8/18, H04W 8/22, H04W 48/18

(54) **MOBILE TELECOMMUNICATIONS DEVICE ACTIVATION**
AKTIVIERUNG EINER MOBILTELEKOMMUNIKATIONSVORRICHTUNG
ACTIVATION DE DISPOSITIF DE TÉLÉCOMMUNICATIONS MOBILES

(30) Priority: 07.09.2016 GB 201615180
(43) Date of publication of application: 14.03.2018
(73) Proprietor: Vodafone IP Licensing Limited, Newbury, Berkshire RG14 2FN (GB)
(72) Inventor: PATEL, Dynal, London, Greater London W2 6BY (GB)
(74) Representative: Boult Wade Tennant LLP

(56) References cited:
- US-A1- 2010 311 391
- US-A1- 2010 311 402
- US-A1- 2010 311 444
- US-A1- 2013 165 075
- US-A1- 2014 024 361

## Description

### TECHNICAL FIELD

The present invention relates to a system and method for generating mobile telecommunications network access selection data for a mobile telecommunications device user.

### BACKGROUND TO THE INVENTION

For a mobile device to be used with a Mobile Network Operator (MNO) - other than for emergency calls - it requires a Subscriber Identity Module or Subscriber Identification Module (SIM). A SIM stores network-specific information used to authenticate and identify subscribers on the network. The information includes the ICCID, IMSI, Authentication Key (Ki), Local Area Identity (LAI) and Operator-Specific Emergency Number. The SIM may also store other carrier-specific data such as the SMSC (Short Message Service Centre) number, Service Provider Name (SPN), Service Dialling Numbers (SDN), Advice-Of-Charge parameters and Value Added Service (VAS) applications.

It is desirable for a user to have a simple experience to connect to a network when they first activate a device - and a straightforward way to do this is to pre-install or embed a SIM in the device before or when it is sold, the SIM, in this instance, being "pre-provisioned" with network-specific information (e.g. the type of information referred to above) required to connect to a particular network so that the user can readily connect to the network.

SOBE (Simple Out of Box Experience) is a Vodafone ® proposition which simplifies the setting up a data enabled device, such as tablets or laptops. Customers are able to self-activate mobile connectivity with a pre-embedded and pre-provisioned SIM card when they turn on their device for the first time.

In other words, in most cases SIM cards will be either bought in a shop either with a device or when the user already has a device and can be provisioned with the relevant information for the user and the SIM is for use with the operator selected by the user in the shop. Whether the shop is an operator or non-operator specific one, a selection can be made from provisioned or pre-provisioned SIM cards from one or more operators and the selected SIM can be used in the device accordingly. The SIM then reaches the user in a provisioned mode.

However, in some instances it is not desirable to have a SIM pre-provisioned in the device when the device is sold. For example, the retailer may prefer to be free to sell the device to a user who wishes to use any network, and would therefore not wish to stock devices with pre-provisioned SIMs. While this may be desirable from a commercial perspective, it creates technical challenges as the SIM is inevitably not pre-configured to be used by a specific user, network operator, device, country, etc. Said differently, when the user receives the SIM card, rather than have a provisioned or pre-provisioned SIM card, the user has an un-provisioned SIM card instead. The number of possible configuration options for the SIM therefore greatly outnumbers the number of configurations the user can possibly go through. Accordingly, simply moving to an un-provisioned SIM card is an impractical solution in practice but in this specific case, pre-provisioning the SIM card is not an acceptable option. It therefore remains challenging to find a solution to provision the SIM card at a later stage with a technical solution that remains practical.

US-A-20140099916 discloses an arrangement for performing location-based subscriber identity update in a wireless user equipment (UE) device. A location of the UE is determined. An indication of a plurality of network connectivity options is provided via a user interface. The plurality of network connectivity options is provided based on the location of the UE. User input selecting a network connectivity option is received via the user interface. The UE is configured according to the selected network connectivity option in response to the user input. The principal aim of this arrangement is to circumvent roaming charges and to get favourable tariffs based on the location. However, beyond determining a location for the terminal, there still remain an incredibly large number of parameters that are relevant to the provisioning of the SIM such that this solution remains of limited use in actual terms. In particular, while it can useful to offer roaming connectivity at a reduced price, the number of actual offers that the user would have to consider would not make this solution practical for anything other than a specific roaming-avoidance arrangement.

US 2010/311402 describes a mobile device having a virtual SIM (VSIM) for storing provisioning data.

US 2014/024361 describes detecting a registration request from a wireless device indicating an International Mobile Subscriber Identity (IMSI) associated with a subscriber identity module (SIM) card in the wireless device, determining that the IMSI is associated with a subscriber account that has not been activated, sending a reply to the wireless device including a web link to be displayed on the wireless device, receiving a message from the wireless device when the web link is activated identifying characteristics of the wireless device, and providing a customized web-based activation process for establishing the subscriber account based on identified characteristics of the wireless device.

US 2010/311391 describes provisioning a mobile device with user preferences and settings.

US 2013/165075 describes a system for connecting a wireless device to a local network of local mobile server systems on an ad hoc basis after the wireless device has left the manufacturer.

US 2010/311444 describes storing provisioning data supporting a plurality of service providers in a VSIM internal memory unit of a mobile device.

### SUMMARY OF THE INVENTION

The scope of the present invention is defined in the claims. A number of additional aspects are described below by way of example only.

According to a first aspect of the present disclosure, there is provided a system for generating mobile telecommunications network access selection data for a mobile telecommunications device user. The system includes first receiving means operable to receive mobile telecommunications device properties information wherein the mobile telecommunications device properties information includes one or more technical features of the device; second receiving means operable to receive mobile telecommunications network access properties information relating to a plurality of mobile telecommunications networks; and network access selection data generation means operable to generate mobile telecommunications network access selection data for the mobile telecommunications device to access one of the plurality of mobile telecommunications networks wherein the mobile telecommunications network access selection data is derived from the mobile telecommunications device properties information and from the mobile telecommunications network access properties information, and to provide the plurality of mobile telecommunications network access selection data to a module of the mobile telecommunications device for selection by the mobile telecommunications device user.

The one or more technical features of the device may comprise one or more of: a radio access technology capability; a non-mobile telecommunications connectivity capability; a mobile voice capability; a contactless or near field connectivity capability; a screen resolution; a battery capacity; and one or more input mechanisms. For example, the mobile telecommunications network access selection data may be based on whether the device is able to connect to one or more of a 2G, 2.5G, 3G, 4G, 5G, network or to any other type of mobile telecommunications network. The non-mobile telecommunications connectivity capability may for example be one or more of a Wi-Fi, WiMAX, Ethernet or any other type of connectivity. The mobile voice capability regards whether the device is operable to support native mobile voice services which for example use a route or access that is dedicated or allocated to voice in a mobile network. Such native voice services can for example include circuit-switch voice services or native packet-switch voice services, for example voice over LTE (VoLTE). Non-native voice services include voice services provided over a data access of the mobile network, such as voice services provided by applications that use a conventional internet connect to establish and carry out voice calls.

The mobile telecommunications device properties information may be provided by one or more of the user, the device and a manufacturer of the device. For example, the user may use an interface of the device to input and/or select some or all of the mobile telecommunications device properties information. Alternatively, or additionally, the device may be pre-configured with technical capability information and may be configured to communicate this information to the system, either upon its own determination or when prompted to do so. Also alternatively or additionally, a manufacturer may provide technical capability information to the system for use for generating the selection data. In this example, identification information for the device -such as an IMEI, a device model, a brand and type of device or any other suitable type of information- may be provided to determine which technical capability information is relevant to this device. In some examples, it can be provided by the user (e.g. by selecting and/or inputting information) or by the device itself (e.g. by transmitting its IMEI, a serial number, a model identifier or any other suitable information). For example, the device may provide mobile telecommunications device properties information which can be generated automatically by the device.

The mobile telecommunications network access selection data may provide a plurality of options for mobile connectivity for the mobile telecommunications device via the plurality of mobile telecommunications networks wherein, in some examples, the plurality of options includes at least one option for each of the plurality of mobile telecommunications networks. In some further examples, the system can include activation means operable to provide the device with data required to activate a selected option of the mobile telecommunications network access selection data.

In one example, the mobile telecommunications device properties information further includes one or more of: a device type for the mobile telecommunications device; a device model for the mobile telecommunications device; and a identifier for the device. The device type can for example by a name or description of a category of the device, such as a phone, smartphone, tablet, tablet computer, a laptop, a computer, a smart watch, a wearable device (e.g. a health device), an Internet of Things "loT" device, a machine-to-machine device, etc. The device model can include a brand and a model identifier. The identifier may for example an IMEI (if allocated), a serial number, or any other suitable identifier. It is noteworthy that in some case the identifier can uniquely identifying the device whereas in other cases it may be a non-unique identifier.

In some examples, the mobile telecommunications device is a secondary device associated with a primary device. For example, the device may be a smartwatch, any other type of wearable device or any other suitable secondary device associated with a primary or master device (e.g. a smartphone, a tablet, etc.). The primary device may for example be connected to the internet via a mobile network, a Wi-Fi network or any other suitable network or may not be connected to the internet as such. In some example, the primary device does not have access to the public internet but might have a restricted access to one or more services (e.g. to a SIM provisioning service). The primary device is configured to communicate with the system to transmit the mobile telecommunications device properties information relating to the mobile telecommunications device via the primary device and/or to receive the mobile telecommunications network access selection data at or via the primary device. Alternatively, or additionally, the (secondary) device may be transmitting and/or receiving the device properties information and the network access selection data, respectively. In some examples, the mobile telecommunications network access selection data is selectable for the user on one of or both of the primary device and the mobile telecommunications device. For example, the user may select a specific network access proposal for the secondary device on the primary device, may select the proposal on the secondary device itself directly, or may choose whether to select the relevant proposal on the primary or secondary device.

In some examples, the system further comprises the mobile telecommunications device, wherein the mobile telecommunications device is operable to detect when a network access selection data is desired and to activate the network access selection data generation means to generate the network access selection data in response thereto. For example, the mobile telecommunications device may be operable (1) to detect if network access selection data is desired by detecting the unavailability of a WiFi connection while the user has a need for a data connection, and/or (2) to detect if the mobile telecommunications device has passed from a retail environment to the user and to activate the network access selection data generation means to generate the network access selection data in dependence thereon.

According to a second aspect of the present disclosure, there is provided a method of generating mobile telecommunications network access selection data for a mobile telecommunications device user. The method includes receiving mobile telecommunications device properties information wherein the mobile telecommunications device properties information includes one or more technical features of the device; receiving mobile telecommunications network access properties information relating to a plurality of mobile telecommunications networks; automatically generating a mobile telecommunications network access selection data for the mobile telecommunications device to access one of the plurality of mobile telecommunications networks wherein the mobile telecommunications network access selection data is derived from the mobile telecommunications device properties information and the mobile telecommunications network properties access information, and providing the plurality of mobile telecommunications network access selection data to a module of the mobile telecommunications device for selection by the mobile telecommunications device user.

According to another aspect of the present disclosure, there is provided a computer program comprising instructions configured to carry out, when executed, the above-method.

### BRIEF DESCRIPTION OF THE DRAWINGS

For a better understanding of the present invention an embodiment will now be described by way of example, with reference to the accompanying drawings, in which:
Figure 1 shows a mobile device including a software agent, and elements of an offer generation platform, in accordance with the embodiment; and
Figure 2 shows the process steps of the embodiment from a mobile device user perspective.

### DETAILED DESCRIPTION OF EMBODIMENT OF THE INVENTION

While the present disclosure is illustrated using an example embodiment, it will be understood that this embodiment is merely for illustrative purposes and that the present disclosure is not limited to this specific embodiment. In particular, the skilled person will recognise that the teachings of the present disclosure apply to many other embodiments and variations and that the invention is defined by the claims only.

This specific embodiment will now be described and provides an example arrangement that enables a Mobile Network Operator (MNO), or any other entity, to propose relevant connectivity offers directly to a customer on their device without disrupting or interfering with any existing agreements during the retail processes, i.e. without requiring a provisioned or pre-provisioned SIM card. Such agreements may for example forbid operators to brand any collaterals or have any physical assets in the packaging (e.g. SIM pack) or device (e.g. SIM card). The embodiment enables an activation of the SIM card only after the retail process has been completed while proposing a technical platform that can generate and select network access data that is relevant and adapted for each user.

Further, the embodiment simplifies the task for a customer to find a suitable network access if they have not connected their device at point of sale by enabling customers to do this directly on the device in a realistic and practical way. The arrangement comprises an intelligent on-device sales agent taking into consideration a number of technical parameters to obtain network access data that is specifically selected and generated on demand and to communicate this data to the customer.

The embodiment is designed to optimise the customer's connectivity process during the lifetime of the device which will, as a result, help ensuring that they can realistically review and compare relevant network access offers and thus be on an optimal tariff given their context. The embodiment is operator agnostic (i.e. offers from multiple operators can be configured) and OEM agnostic (i.e. it can be embedded on any OEM device), and can used both with a primary device (e.g. smart phone, tablet) or a secondary device (e.g. tethered to a mobile WiFi device). The embodiment can interwork with known processes to activate and provision connectivity and SIM types (e.g. UICC and eSIM).

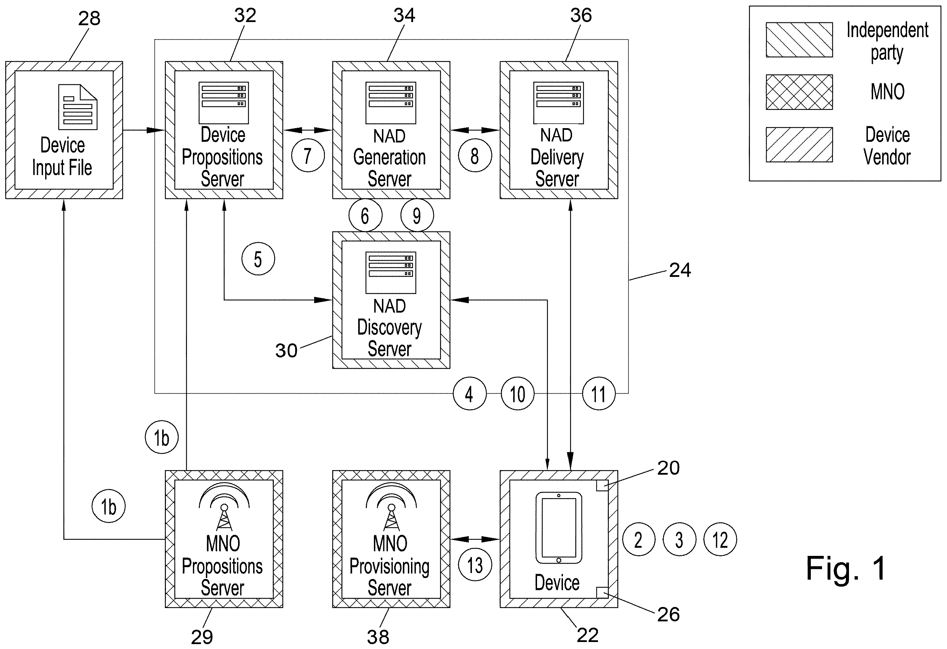

This specific embodiment comprises two elements that assist it to bypass the retail process and to provide a realistic late SIM provisioning. Namely, this arrangement comprises (1) a software agent 20 on the device 22 and (2) an network access data generation platform or network access selection data generation platform 24 that is located independently of the device 22 and any MNO (see Figure 1). The software agent 20 is generic (i.e. not branded by an MNO). Assets and messages displayed to the customer can be downloaded from the network access data generation platform 24 or from a pre-embedded network access data pack 26 stored on the device 22 in case the device 22 is not able to go online. The network access data generation platform 24 is configured to generate and/or select network access data from one or more MNOs which are downloaded and displayed in the software agent 20 using an operator neutral layout (i.e. without bias or preferential treatment to one operator). For example, the network access data can be presented as unbranded options for the user to select from.

The device 22 may be any suitable device - such as a mobile device, e.g. a mobile telephone, smartphone, tablet, laptop, netbook, etc. The device may be able to connect to the internet by WiFi/WLAN and a mobile (cellular) telecommunications network provided by a MNO. The WiFi connection may be made without authentication or subscription but generally has limited geographical coverage - and so may be unavailable at times. The mobile telecommunications network connection requires authentication and a subscription but generally has much more extensive geographical coverage than WiFi. The embodiment enables a user to select an appropriate mobile telecommunications network connection for activation in a straightforward manner after purchasing a device.

The following steps provide an example process illustrating how the software agent 20 on device 22 and the network access data generation platform 24 can interwork. The numbered steps in the following discussion correspond to the circled numbers in Figure 1.
1. A device input file 28, which may be provided by the device vendor, is used to configure a new device 22 on the network access data generation platform 24. It includes details of the device proposition (e.g. product information, specifications, target audience, photography, marketing messages including USP). Connectivity propositions information from MNOs (from MNO Propositions Servers 29) that are applicable based on devices, target segments and/or markets is also provided to the platform (see 1b). Device and Connectivity proposition information is used to generate targeted offers for the end customer that are also adapted to (and optimally displayed) on the device 22. The software agent 20 can be implemented into the device 22 by the OEM.
2. The software agent 20 on the device 22 firstly determines whether the device 22 has or has not been connected to a mobile network during the retail process. To do this it can check one or more of a number of conditions, such as:
   - Device 22 is not in Demo mode (i.e. device is not being displayed in Retail in demo or Retail mode)
   - The setup wizard has been completed (i.e. the device has been fully configured by the customer)
   - No SIM card is inserted (i.e. device has not been connected during Retail process). Typically, the sales agent will setup device for customer and insert a SIM card.
   - A unique Device 22 ID exists. This can indicate that the device is not a test device but one that has a unique serial number linked with production devices (e.g. IMEI)
   - A user account exists. In this case, one or more user accounts exists which enables determination of a customer profile

   Once some of or all the conditions have been met, the software agent 20 is set to an active mode.
3. Once activated, the software agent 20 listens for connectivity needs. The software agent 20 is configured to propose network access data when the user needs mobile network connectivity. It can listen for one or more of the following set of events to determine or estimate a mobile network connectivity need, such as:
   - Launching device browser or App with no connectivity available
   - Multiple WiFi connection attempts
   - WiFi captive portal detection
   - No WiFi connection for extended period
   - Leaving a WiFi network
   - Weak WiFi signal or poor throughput
   - Change in location or country
   - Manual request for internet from the user
4. The software agent 20 then notifies the customer using available mechanisms (such as notification, on screen prompts, auto launching the application) to setup mobile network connectivity on the device 22. Once the customer is engaged, the software agent 20 requests mobile network connectivity access data from the Network Access Data "NAD" Discovery Server 30 (part of the network access data generation platform 24). The software agent 20 provides a Device identifier and customer profile (e.g. customer segment, age, sex, location, target device, needs, whether existing customer) to the Network Access Data Discovery Server 30. Optionally, the customer can also be requested to input which device he is currently targeting, such as the current device or an accessory (e.g. smart watch). In the case of a connected accessory, the customer can scan a unique OR code on the packaging or in collaterals that contains device ID, or the primary device may have already detected the associated accessory and may have communicated information regarding the accessory to the software agent. The software agent 20 then displays network access data (e.g. network access options, proposal or that are relevant for the connected accessory.
   In some example, a customer profile is built in an interactive exchange with the customer for example using a questionnaire. Location information can be obtained indirectly using existing mechanisms such as GPS, cell tower triangulation and/or using WiFi IDs lookup services.
5. The Network Access Data Discovery Server 30 checks with the Device Propositions Server 32 (part of the network access data generation platform 24) to determine whether the device 22 is provisioned on the platform 24 and connectivity proposals exist.
6. The Network Access Data Discovery Server 30 instructs the Network Access Data Generation Server 34 (part of the network access data generation platform 24) to create network access data (e.g. proposals) based on the Device ID and Customer profile.
7. Network Access Data Generation Server 34 contacts the Device Propositions Server 32 to create the network access data. Depending on the device input file 28, connectivity proposals can be generated from one or more connectivity service providers. Service providers can provide a range of connectivity proposals not limited to:
   - Limited connectivity trial
   - Time or session based tariff
   - Pre-paid tariffs
   - Post-paid tariffs
   - Add device to an existing plan

   Connectivity proposals can be limited to certain locations, for example some proposal will only be available for a country or an area within the country and the network access data can be generated accordingly. In a case where the customer is identified as an existing customer, they may also receive proposals to add the device to a shared data plan.
   The network access data is generated for the device 22 that generated the initial request for connectivity data. In a case where the request came from a primary device associated with a secondary device (e.g. smart watch), the connectivity data can still be prepared for viewing on the primary device 22 that submitted the initial request. The network access data can be provided for the two devices together or separately, as appropriate. Information submitted as part of the Device Input File 28 is used to generate the. MNO propositions that are linked with a specific device are optimised so that the content can be viewed optimally for the specific device and/or so that the connectivity data is based on one or more technical features of the device. For example, if it is known that a device is a 4G-only device, the network access data will not include connectivity proposals based on a 5G access.
   On or more network access data packs or connectivity packs can be generated, wherein these packs contain the MNO branded assets and messages considered as necessary (or possibly useful) for the purchase and provisioning process based on the generated network access data. The pack(s) will be downloaded to the device 22 and utilised in the software agent 20 on the device 22 for setting up the connectivity This advantageously helps keeping the device 22 a vanilla (or unbranded) device until after the retail process.
8. Network Access Data Generation Server 34 forwards to the delivery Server 36 (part of the network access data generation platform 24).
9. Network Access Data Generation Server 34 informs the Network Access Data Discovery Server 30 that connectivity data is ready for delivery.
10. Network Access Data Discovery Server 30 informs the Software agent 20 on the Device 22 where to download the data, packs and/or proposals.
11. The Software agent 20 downloads the network access data, packs and/or proposal from the Network Access Data delivery Server 36 and presents them to the customer. The entire purchase and provisioning workflow is customised using the branded assets in the connectivity pack. Where proposals are received from multiple MNOs, the selection of MNO can be performed in an operator neutral way where there all Operators are promoted equally. Three example mechanisms to do so are as follows:
   - MNO logos are allocated the same visible screen space (without scrolling)
   - MNO logos are randomly presented in a list (without scrolling)
   - MNO logos are displayed serially in a random order (e.g. using a carousel display mechanism)

   Offline connectivity packs can also be preinstalled on the device 22 at 26 for optimisation purposes. In instances where there is controlled distribution to markets, it is possible to have appropriate connectivity proposals prepared for the markets. In this case the connectivity packs can be pre-generated and installed in the device 22. The software agent 20 in this instance can contact to Network Access Data Discovery Server 30 to check the validity of the pack and download updates to the existing network access data pack. Offline connectivity proposals/packs can be kept encrypted and can only be displayed to customers if the post retail conditions are met and if they are current and valid.
   It is noteworthy that in this example, the connectivity packs are received by the terminal prior to the user selection of a suitable connectivity proposal however in other cases the implementation may differ. Said differently, a device can receive at least one pack comprising one or more connectivity proposal(s), depending on the implementation. For example, in cases as discussed in the above example, the device will receive one or packs (e.g. as part of the network access data) with a plurality of connectivity proposals for the user to select a suitable proposal. The selected proposal (or proposals) can then be installed based on the information in the pack(s). In another example, the device first receives information regarding the proposal generated by the platform and can then make a selection on that basis. Once a selection has been made, the platform can transmit the corresponding connectivity pack to the device for activation.
12. The customer selects a network access data proposal for a Service Provider.
13. Mobile network internet and/or any other services associated with the selected network access data proposal is provisioned for the device 22. In the case of a pre-embedded or pre-installed SIM, the SIM credentials can be automatically downloaded onto the device 22 from a MNO Provisioning Server 38. Alternatively, a voucher code may be generated which can be used in combination with a dedicated provisioning application to download the SIM credentials. Where there is no embedded SIM in the device 22, an offline provisioning processes can also be supported by triggering shipment of a SIM directly to the customer, wherein the SIM is provisioned with the appropriate information based on the selected network access proposal.

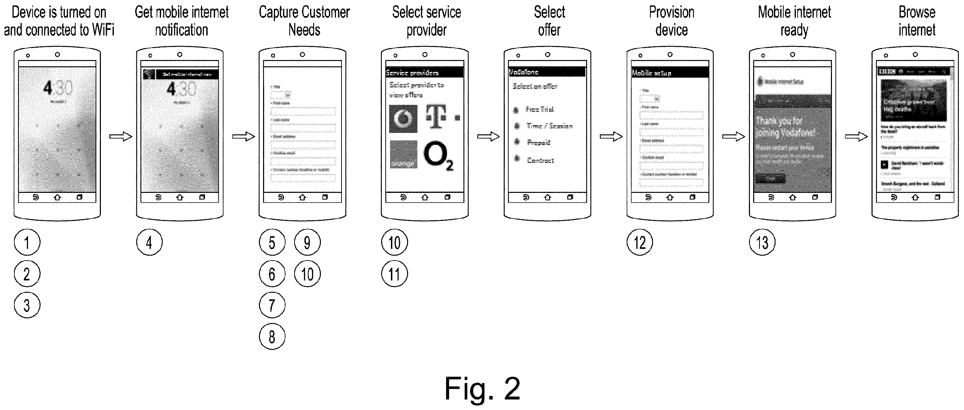

Figure 2 depicts an example process from the perspective of a device's user wherein the user wishes to access the internet from a terminal.. It maps the 13 steps above to a step by step user flow. As the skilled person will appreciate, Figure 2 is an illustrative example such other implementations may be possible. Also, the process of Figure 2 may be used in an arrangement wherein some of the steps carried out by the network access data generation platform may vary, for example the packs may be transmitted prior to user selection or the selected pack can be transmitter after user selection without affecting the process illustrated in Figure 2.

Also, in this example, the user first selects a service provider / network operator and then selects a proposal for this provider. However, in other examples, the user may make a choice between proposals with proposals being from a two or more providers. In some examples, the user may be able to indicate that they want to consider data-only access proposal for a pre-paid arrangement and accordingly, the proposals matching this and matching the device's capabilities can be put forward to the user for selection.

The example embodiment discussed above provides the following features that can each assist in providing a platform that can provide suitable connectivity offers to a user and device while trying to avoid promoting one or more particular operators:
- **On demand based proposal generation** (step 3 above): the software agent 20 can be configured to only be activated when it detects that a user is likely requiring a mobile network internet connection and/or access to any other mobile services. For example, in case it detects a presumed need for an internet connection, it can use triggers such as (1) the customer leaving a WiFi zone and no mobile network connection is activated, (2) the user launches and application that is requesting an internet connection, (3) core applications that are configured to update over mobile network make connectivity requests, and/or (4) the user makes failed attempts to connect on an existing mobile connection. The customer can be notified (e.g. as in step 4 above) using any suitable mechanisms supported by device 22 such as notifications, on-screen prompts, pop-up screens, lock-screen advertising.
- **Context based network access data generation:** the software agent 20 is able to output connectivity or network access proposals that are based on a number of parameters and in particular based on at least one or more technical features of the device for which the network access data has been generated. in one example, the following parameters can be determined and used in step 4 above to suggest the suitable tariff: location (used to determine if a local market tariff or promotion is available for the device 22 and if the device 22 is in a location that is different to the home network), device type (used to determine the appropriate tariff for the category type: e.g. smartphone, tablet, mobile broadband device, wearable, etc..), device capabilities (used to determine an appropriate tariff based on the device capabilities such as voice support, LTE capability, NFC, screen resolution, battery capability, input mechanisms), customer details (used to determine if the customer is an existing Vodafone customer to for example offer them to add the device to a shared data plan) and customer segment (used to determine the most suitable for customers based on age, gender, socio-economic profile). In other examples, different, fewer or more parameters may be taken into account.

- **Multiple operator connectivity proposals** (see for example steps 5-10): the software agent 20 can support connectivity proposal from multiple connectivity providers. It can communication with a Network Access Data Discovery Service provided by the network access data generation platform 24. The device 22 based on its IMEI or any other device information can check whether it is provisioned to received tailored connectivity proposals and/or request connectivity proposals. in some cases, the Network Access Data Discovery Service can be configured to deliver connectivity proposals from one or more connectivity providers based on a TAC code (range of IMEIs). The promotions are targeted based on the context.
- **Multiple Operator connectivity proposal presentation:** the software agent 20 presents operator connectivity proposals fairly to prevent Operator disintermediation (see for example step 11 above). The Network Access Data Discovery Service can be configured to only show connectivity proposals from one operator at a time or can be configured to show connectivity proposals from multiple operators. In the case that multiple operators connectivity proposals are available they may not be shown in a way that promotes operator disintermediation for example by restricting operators to a tariff type (prepaid, post-paid, session or time based, free connectivity proposals).
- **Connectivity packs:** the software agent 20 can be pre-installed (step 11 above) with the promotional pack 26 containing generic connectivity proposals and/or the packs can be received from the network access data generation platform 24. Where one or more packs are preinstalled, the pack(s) can be updated with a targeted promotional pack once the device is able to connect to the Network Access Data Discovery Service and to receive connectivity proposals that are adapted to the technical features of this device.
- **Bundled connectivity packs and competitions:** the software agent 20 is able to propose promotional products and services based on the context (step 11 above). If for example the connectivity offer and promotional product are deemed appropriate for this device (e.g. based on its technical features), they can be part of the generated network access data. Any suitable arrangements can be used for redeeming the promotional product, for example users can redeem the promotional product using a unique code that is generated with the pack and/or when selecting or activating a mobile network connectivity proposal. Users can also be automatically entered into competitions when they select or activate mobile connectivity or any other suitable mobile service being part of the selected connectivity offer.

Viewed from a different perspective, the present disclosure provides an apparatus, system or method in accordance with the following numbered paragraphs:
Paragraph 1. Apparatus for generating mobile telecommunications network selection data for a mobile telecommunications device (22) user, the apparatus including first receiving means (30) operable to receive mobile telecommunications device (22) properties information; second receiving means (32) operable to receive mobile telecommunications network properties information relating to a plurality of mobile telecommunications networks; and offer generation means (34) operable to generate a plurality of mobile telecommunications network subscription offers by processing the mobile telecommunications device properties information and the mobile telecommunications network properties information, and to provide the plurality of mobile telecommunications network subscription offers to a module (20) of the mobile telecommunications device (22) for selection by the mobile telecommunications device (22) user.
Paragraph 2. The apparatus of Paragraph 1, wherein the apparatus is hosted independently of the plurality of mobile telecommunications networks.
Paragraph 3. The apparatus of Paragraph 1 or 2, wherein the mobile telecommunications device (22) properties information is provided by one or more of the user, the device (22) and a manufacturer of the device.
Paragraph 4. The apparatus of Paragraph 3, wherein the mobile telecommunications device (22) properties information is provided by the device (22) and is generated automatically by the device (22).
Paragraph 5. The apparatus of Paragraph 4, wherein the mobile telecommunications device (22) properties information includes a location of the device (22).
Paragraph 6. The apparatus of Paragraph 4 or 5, wherein the mobile telecommunications device (22) properties information includes technical features of the device.
Paragraph 7. The apparatus of any one of Paragraphs 1 to 6, including activation means operable to provide the device (22) with data required to activate a selected network subscription.
Paragraph 8. A system including the apparatus of any one of Paragraphs 1 to 7 in combination with the mobile telecommunications device (22), wherein the mobile telecommunications device (22) is operable to detect when a subscription to a mobile telecommunications network is required and to activate the offer generation means (34) to generate a plurality of mobile telecommunications network subscription offers in response thereto.
Paragraph 9. The system of Paragraph 8, wherein the mobile telecommunications device (22) is operable to detect if a subscription to a mobile telecommunications network is required by detecting the unavailability of a WiFi connection while the user has a need for a data connection.
Paragraph 10. The system of Paragraph 8 or 9, wherein the mobile telecommunications device (22) is operable to detect if the mobile telecommunications device (22) has passed from a retail environment to the user and to activate the offer generation means (34) to generate a plurality of mobile telecommunications network subscription offers in dependence thereon.
Paragraph 11. The systems of Paragraph any one of Paragraphs 8 to 10, wherein the module (20) of the mobile telecommunications device (22) is configured independently of the plurality of mobile telecommunications networks.
Paragraph 12. The systems of any one of Paragraphs 8 to 11, wherein the module (20) of the mobile telecommunications device (22) is configured by a manufacturer of the device (22).
Paragraph 13. The systems of any one of Paragraphs 8 to 12, wherein the module (20) of the mobile telecommunications device (22) is configured to provide the user with the plurality of mobile telecommunications network subscription offers without preference to any one of the plurality of mobile telecommunications networks.
Paragraph 14. A method of generating mobile telecommunications network selection data for a mobile telecommunications device (22) user, the method including receiving mobile telecommunications device (22) properties information; receiving mobile telecommunications network properties information relating to a plurality of mobile telecommunications networks; automatically generating a plurality of mobile telecommunications network subscription offers by processing the mobile telecommunications device properties information and the mobile telecommunications network properties information, and providing the plurality of mobile telecommunications network subscription offers to a module (20) of the mobile telecommunications device (22) for selection by the mobile telecommunications device (22) user.
Paragraph 15. The method of Paragraph 14, implemented using the apparatus of any one of Paragraphs 1 to 7 or the system of any one of Paragraphs 8 to 13.
Paragraph 16. Apparatus for generating mobile telecommunications network selection data, substantially as hereinbefore described with reference to and/or substantially as illustrated in any one of or any combination of the accompanying drawings.
Paragraph 17. A system substantially as hereinbefore described with reference to and/or substantially as illustrated in any one of or any combination of the accompanying drawings.
Paragraph 18. A method of generating mobile telecommunications network selection data, substantially as hereinbefore described with reference to and/or substantially as illustrated in any one of or any combination of the accompanying drawings.

According to a first aspect of the above numbered Paragraphs, there is provided apparatus for generating mobile telecommunications network selection data for a mobile telecommunications device user, the apparatus including first receiving means operable to receive mobile telecommunications device properties information; second receiving means operable to receive mobile telecommunications network properties information relating to a plurality of mobile telecommunications networks; and offer generation means operable to generate a plurality of mobile telecommunications network subscription offers by processing the mobile telecommunications device properties information and the mobile telecommunications network properties information, and to provide the plurality of mobile telecommunications network subscription offers to a module of the mobile telecommunications device for selection by the mobile telecommunications device user.

The apparatus may be hosted independently of the plurality of mobile telecommunications networks. The mobile telecommunications device properties information may be provided by one or more of the user, the device and a manufacturer of the device. The mobile telecommunications device properties information may be provided by the device and is generated automatically by the device. The mobile telecommunications device properties information may include a location of the device. The mobile telecommunications device properties information may include technical features of the device - such as voice support LTE connectivity, NFC capability, screen resolution, battery capacity, input mechanisms. The apparatus may include activation means operable to provide the device with data required to activate a selected network subscription, so the device does not require a pre-installed operator-specific SIM (a pre-provisioned SIM) at the point of sale.

According to another aspect of the above numbered Paragraphs, there is provided a system including the apparatus mentioned above in combination with the mobile telecommunications device, wherein the mobile telecommunications device is operable to detect when a subscription to a mobile telecommunications network is required and to activate the offer generation means to generate a plurality of mobile telecommunications network subscription offers in response thereto. The mobile telecommunications device may be operable to detect if a subscription to a mobile telecommunications network is required by detecting the unavailability of a WiFi connection while the user has a need for a data connection. The mobile telecommunications device may be operable to detect if the mobile telecommunications device has passed from a retail environment to the user and to activate the offer generation means to generate a plurality of mobile telecommunications network subscription offers in dependence thereon. The module of the mobile telecommunications device may be configured independently of the plurality of mobile telecommunications networks. The module of the mobile telecommunications device is configured by a manufacturer of the device. The module of the mobile telecommunications device may be configured to provide the user with the plurality of mobile telecommunications network subscription offers without preference to any one of the plurality of mobile telecommunications networks.

According to a further aspect of the above numbered Paragraphs, there is provided a method of generating mobile telecommunications network selection data for a mobile telecommunications device user, the method including receiving mobile telecommunications device properties information; receiving mobile telecommunications network properties information relating to a plurality of mobile telecommunications networks; automatically generating a plurality of mobile telecommunications network subscription offers by processing the mobile telecommunications device properties information and the mobile telecommunications network properties information, and providing the plurality of mobile telecommunications network subscription offers to a module of the mobile telecommunications device for selection by the mobile telecommunications device user. The method may be implemented using the apparatus or the system mentioned above.

The present disclosure thus facilitates the automatic determination of context-based tariffs for multiple network operators, for selection by the user and provides a post-retail mobile internet activation service (PMIAS). This PMIAS can for example help addressing the problem of having a pre-provisioned SIM card of a particular network operator by separating customer acquisition from activation. In this example, there is no requirement for a SIM card (or operator profile) to be pre-embedded or pre-provisioned in the device. The activation is only initiated after the device sale has been made so there is no conflict with retailer or current business models with OEMs (Original Equipment Manufacturers - the manufactures of the relevant mobile device). The SIM activation process is only fulfilled after the device acquisition process is complete. This could be using for example using an offline process (where a SIM card is shipped to the customer or customer picks a SIM card from an Operator store) or online process (where the customer is directed on how to download an operator profile over the air - which could, e.g. then provide the required network-specific information to a pre-installed or pre-embedded SIM, thereby "provisioning" the SIM). The OEM may be incentivised to preload the unbranded PMIAS service on their devices through a commission scheme based on the number of connections acquired or activated and / or ongoing top ups. The PMIAS application is only activated after a sale has taken place and is able to run targeted marketing campaigns specific to the context (user, device, and place). It is able to bundle context based promotions / competitions with the connectivity offer. A Promotional Discovery Service (PDS) is used to support promotions from multiple connectivity providers (mobile network operators) in a single application. PMIAS can also be used via a look up service to find a suitable offer for companion connected devices such as wearable's by capturing a unique serial number. It may have preinstalled with a promotional pack to offer promotions in both offline and online modes. Targeted promotion packs are automatically download once a connection is established to the PDS.

Viewed from one perspective, the present disclosure provides teachings and proposal in respect of the following aspects:
- Method and apparatus for providing an MNO / OEM / channel agnostic promotional offer service
- Method and apparatus for detecting end of retail process
- Method and apparatus for determining a connectivity need
- Method and apparatus for capturing details to determine customer context and needs
- Method and apparatus for displaying multiple MNO offers in an operator neutral way
- Method and apparatus for optimising promotional offer content for the device type
- Method and apparatus for optimising offer pack download using offline content packs
- Method and apparatus for supporting promotions from multiple MNOs and targeting customers
- Method and apparatus for offline promotions where embedded SIM is not available
One of the problems addressed is that inability for operators to promote connectivity offers to customers on products that are sold in non-Telco channels. Operators are not able to brand the product packaging or collaterals or promote the offers on the device directly in the software. This is because the retail channels may demand that products sold in their channels should be operator agnostic. The retail channel typically receives a commission for selling connectivity at point of sale. They want the flexibility to sell the most commercially beneficial tariffs.
One of the embodiments addresses this problem by installing an unbranded software agent on the device. The offers can be downloaded from a network access selection data generation platform on to the device post the retail process. This ensures that the device remains vanilla (unbranded) at all times during the retail process.

It should be noted that any system or method of the present invention may, where appropriate, be implemented using a single apparatus, a plurality of apparatus, a distributed system (e.g. in a cloud environment), any other suitable platform or any combination thereof. For example, in some of the above examples the servers 30, 32, 34 and 36 have been discussed as different servers. However, the skilled person will understand that the server may be implemented using any of: one or more standalone servers, one or more distributed servers, one or more virtual servers, one or more modules of a single logical (and optionally physical) server, etc. For example, the network access data generation platform may be implemented in a standalone server (from a physical and/or logical perspective) that can be implemented in one server, multiple servers and/or in a distributed environment.

Also, in the case of a primary/secondary device arrangement, if a module/agent is provided, it may be provided in one or both of the primary and secondary devices. For example, the primary device may be configured to already obtain technical feature information for the secondary device during or after an association procedure. Accordingly, the primary device may include a module or agent that can assist with the configuration and selection of network access data for the secondary device. In other cases, the secondary device may instead (or also) include a module or agent that can assist with the communication with the platform. Communications that may be carried out between the secondary device and the platform can in some cases go through the primary device (e.g. using a tethering arrangement) or in other cases can be between the secondary device and the platform without going through the secondary device.

Additionally, in one example, the network access data generation platform 24 is configured to generate the network access data on the fly based on sets of rules. More specifically, while in some cases the platform 24 can select the relevant network access options (or the best matches amongst the relevant ones) for the user and device from a variety of options or proposal available for the MNOs, in other cases the MNO may not communicate a proposal or offer as such but may instead communicate one or more sets of rules for building a proposal. The platform can then generate network access data for the user and device at least in part based on rules received from operators. For example and as discussed above, the network access data can be generated based on information such as a combination of one or more of the user being already an existing subscriber of the operator, the Radio Access Technologies (RAT) supported by the terminal, the screen size, the model, the brand, etc. Whichever information is being used, the network access data / connectivity proposal is being created based on a set of rules including one or more rules based on a technical feature of the device. Accordingly, the platform 24 would be able to generate connectivity data that is better adapted to the user and device while using less storage (as storing rules rather than proposals is less storage-consuming). On the other hand, the platform would likely require more processing capabilities as generating the connectivity data is likely to require more processing resources than to search through existing data to find matching connectivity data.

It is also noteworthy that whenever a mention is made of an operator or mobile operator, the same teachings apply equally to a virtual operator or MVNO (Mobile Virtual Network Operator). Also the expressions "network access selection data" and "network access data" have been used interchangeably as they relate to network access data that is for use by a user for selection of a network access or connectivity proposal.

Additionally, while methods steps may be discussed in a specific order in the present disclosure, the skilled person will appreciate that, so long as it is technically feasible, the method steps being carried out in any other order is considered as fully considered and disclosed herein.

## Claims

1. A system for generating mobile telecommunications network access selection data for a mobile telecommunications device (22) user, the system including:
first receiving means (30) operable to receive mobile telecommunications device properties information wherein the mobile telecommunications device properties information includes one or more technical features of the device;
second receiving means (32) operable to receive mobile telecommunications network access properties information relating to one or more mobile telecommunications networks; and
network access selection data generation means (34) operable:
to automatically generate mobile telecommunications network access selection data for the mobile telecommunications device to access at least one of the one or more mobile telecommunications networks, wherein the mobile telecommunications network access selection data provides a plurality of options for mobile connectivity for the mobile telecommunications device via the one or more mobile telecommunications networks, wherein the mobile telecommunications network access selection data is derived from the mobile telecommunications device properties information and from the mobile telecommunications network access properties information, wherein the mobile telecommunications network access selection data is based on the one or more technical features of the device, and
to provide mobile telecommunications network access selection data to the mobile telecommunications device user for selection.

2. The system of claim 1, wherein the one or more technical features of the device comprise one or more of:
a radio access technology capability;
a non-mobile telecommunications connectivity capability;
a mobile voice capability;
a contactless or near field connectivity capability;
a screen resolution;
a battery capacity; and
one or more input mechanisms.

3. The system of claim 1 or claim 2, wherein the mobile telecommunications device properties information is provided by one or more of the user, the device and a manufacturer of the device.

4. The system of claim 3, wherein the mobile telecommunications device properties information is provided by the device and is generated automatically by the device.

5. The system of any preceding claim, including activation means operable to provide the device with data required to activate a selected option of the mobile telecommunications network access selection data.

6. The system of any preceding claim, wherein the mobile telecommunications device properties information further includes one or more of:
a device type for the mobile telecommunications device;
a device model for the mobile telecommunications device; and
identifier for the device.

7. The system of any preceding claim, wherein the mobile telecommunications device is a secondary device associated with a primary device.

8. The system of claim 7, wherein the primary device is configured to communicate with the system to do at least one of:
transmit the mobile telecommunications device properties information relating to the mobile telecommunications device via the primary device, and
receive the mobile telecommunications network access selection data at or via the primary device.

9. The system of claim 7 or claim 8, wherein the mobile telecommunications network access selection data is selectable for the user on one of or both of the primary device and the mobile telecommunications device.

10. The system of any preceding claim, further comprising the mobile telecommunications device, wherein the mobile telecommunications device is operable to detect when network access selection data is desired and to activate the network access selection data generation means (34) to generate the network access selection data in response thereto.

11. The system of claim 10, wherein the mobile telecommunications device is operable to detect if network access selection data is desired by detecting the unavailability of a WiFi connection while the user has a need for a data connection.

12. The system of claim 10 or claim 11, wherein the mobile telecommunications device is operable to detect if the mobile telecommunications device has passed from a retail environment to the user and to activate the network access selection data generation means to generate the network access selection data in dependence thereon.

13. A method of generating mobile telecommunications network access selection data for a mobile telecommunications device (22) user, the method including:
receiving, by first receiving means, mobile telecommunications device properties information wherein the mobile telecommunications device properties information includes one or more technical features of the device;
receiving, by second receiving means, mobile telecommunications network access properties information relating to one or more mobile telecommunications networks;
automatically generating, by network access selection data generation means, a mobile telecommunications network access selection data for the mobile telecommunications device to access at least one of the one or more mobile telecommunications networks, wherein the mobile telecommunications network access selection data provides a plurality of options for mobile connectivity for the mobile telecommunications device via the one or more mobile telecommunications networks, wherein the mobile telecommunications network access selection data is derived from the mobile telecommunications device properties information and the mobile telecommunications network properties access information, wherein the mobile telecommunications network access selection data is based on the one or more technical features of the device, and
providing, by network access selection data generation means, the mobile telecommunications network access selection data to the mobile telecommunications device user for selection.

14. A computer program product comprising instructions configured to carry out, when executed, the method of claim 13.

## Patentansprüche

1. System zum Generieren von Daten zur Auswahl des Zugangs zum Mobiltelekommunikationsnetzwerk für einen Benutzer der Mobiltelekommunikationsvorrichtung (22), wobei das System einschließt:
Erste Empfangsmittel (30), die betriebsfähig sind, Information von Eigenschaften der Mobiltelekommunikationsvorrichtung zu empfangen, wobei die Information von Eigenschaften der Mobiltelekommunikationsvorrichtung ein oder mehrere technische Merkmale der Vorrichtung einschließt;
zweite Empfangsmittel (32), die betriebsfähig sind, Information von Zugangseigenschaften zum Mobiltelekommunikationsnetzwerk zu empfangen, die sich auf ein oder mehrere Mobiltelekommunikationsnetzwerke bezieht; und
Mittel (34) zum Generieren von Daten zur Auswahl des Netzwerkzugangs, betriebsfähig:
Um automatisch Daten zur Auswahl des Zugangs zum Mobiltelekommunikationsnetzwerk für die mobile Telekommunikationsvorrichtung zu generieren, um zumindest auf eins des einen oder der mehreren Mobiltelekommunikationsnetzwerke zuzugreifen, wobei die Daten zur Auswahl von Zugang zum Mobiltelekommunikationsnetzwerk eine Vielzahl von Optionen für mobile Konnektivität für die Mobiltelekommunikationsvorrichtung über das eine oder die mehreren Mobiltelekommunikationsnetzwerke bereitstellen, wobei die Daten zur Auswahl des Zugangs zum Mobiltelekommunikationsnetzwerk aus der Information von Eigenschaften der Mobiltelekommunikationsvorrichtung und aus Information von Zugangseigenschaften des Mobiltelekommunikationsnetzwerks abgeleitet sind, wobei die Daten zur Auswahl des Zugangs zum Mobiltelekommunikationsnetzwerk auf dem einen oder den mehreren technischen Merkmalen der Vorrichtung basieren, und
um dem Benutzer der Mobiltelekommunikationsvorrichtung, Daten zur Auswahl von Zugang zum Mobiltelekommunikationsnetzwerk zur Auswahl bereitzustellen.

2. System nach Anspruch 1, wobei das eine oder die mehreren technischen Merkmale der Vorrichtung eins oder mehrere von Folgenden umfassen:
Eine Fähigkeit für Funkzugangstechnologie;
eine Konnektivitätsfähigkeit für nicht mobile Telekommunikation;
eine mobile Sprachfähigkeit;
eine kontaktlose oder Nahfeld-Konnektivitätsfähigkeit;
eine Bildschirmauflösung;
eine Batteriekapazität; und
einen oder mehrere Eingabemechanismen.

3. System nach Anspruch 1 oder Anspruch 2, wobei die Information von Eigenschaften der Mobiltelekommunikationsvorrichtung von einem oder mehreren von Folgenden, dem Benutzer, der Vorrichtung und einem Hersteller der Vorrichtung bereitgestellt wird.

4. System nach Anspruch 3, wobei die Information von Eigenschaften der Mobiltelekommunikationsvorrichtung von der Vorrichtung bereitgestellt und automatisch von der Vorrichtung generiert wird.

5. System nach irgendeinem vorhergehenden Anspruch, das Aktivierungsmittel einschließt, die betriebsfähig sind, der Vorrichtung Daten bereitzustellen, die erforderlich sind, um eine selektierte Option von Daten zur Auswahl des Zugangs zum Mobiltelekommunikationsnetzwerk zu aktivieren.

6. System nach irgendeinem vorhergehenden Anspruch, wobei die Information von Eigenschaften der Mobiltelekommunikationsvorrichtung ferner eine oder mehrere einschließt von:
Einem Vorrichtungstyp für die Mobiltelekommunikationsvorrichtung;
einem Vorrichtungsmodell für die Mobiltelekommunikationsvorrichtung; und
einer Kennung für die Vorrichtung.

7. System nach irgendeinem vorhergehenden Anspruch, wobei die Mobiltelekommunikationsvorrichtung eine sekundäre Vorrichtung ist, die mit einer primären Vorrichtung verbunden ist.

8. System nach Anspruch 7, wobei die primäre Vorrichtung ausgelegt ist, mit dem System zu kommunizieren, um zumindest eins von Folgenden zu tun:
Senden der Information von Eigenschaften der Mobiltelekommunikationsvorrichtung, die sich auf die Mobiltelekommunikationsvorrichtung bezieht, über die primäre Vorrichtung, und
Empfangen von Daten zur Auswahl des Zugangs zum Mobiltelekommunikationsnetzwerk an der oder über die primäre(n) Vorrichtung.

9. System nach Anspruch 7 oder Anspruch 8, wobei die Daten zur Auswahl des Zugangs zum Mobiltelekommunikationsnetzwerk für den Benutzer auf dem einen oder beiden der primären Vorrichtung und der Mobiltelekommunikationsvorrichtung wählbar sind.

10. System nach irgendeinem vorhergehenden Anspruch, das ferner die Mobiltelekommunikationsvorrichtung umfasst, wobei die Mobiltelekommunikationsvorrichtung betriebsfähig ist, zu detektieren, wenn Daten zur Auswahl von Netzwerkzugang erwünscht sind und das Mittel (34) zum Generieren von Daten zur Auswahl von Netzwerkzugang zu aktivieren, um als Antwort darauf Daten zur Auswahl des Netzwerkzugangs zu generieren.

11. System nach Anspruch 10, wobei die Mobiltelekommunikationsvorrichtung betriebsfähig ist, zu detektieren, ob Daten zur Auswahl von Netzwerkzugang erwünscht sind, durch Detektieren der Nichtverfügbarkeit eine WiFi-Verbindung, während der Benutzer einen Bedarf für eine Datenverbindung hat.

12. System nach Anspruch 10 oder Anspruch 11, wobei die Mobiltelekommunikationsvorrichtung betriebsfähig ist, zu detektieren, ob die Mobiltelekommunikationsvorrichtung aus einem Einzelhandelsumfeld auf den Benutzer übergegangen ist, und das Mittel zum Generieren von Daten zur Auswahl von Netzwerkzugang zu aktivieren, um in Abhängigkeit davon die Daten zur Auswahl von Netzwerkzugang zu generieren.

13. Verfahren zum Generieren von Daten zur Auswahl des Zugangs zum Mobiltelekommunikationsnetzwerk für einen Benutzer der Mobiltelekommunikationsvorrichtung (22), wobei das Verfahren einschließt:
Empfangen, durch erste Empfangsmittel, von Information von Eigenschaften der Mobiltelekommunikationsvorrichtung, wobei die Information von Eigenschaften der Mobiltelekommunikationsvorrichtung ein oder mehrere technische Merkmale der Vorrichtung einschließt;
Empfangen, durch zweite Empfangsmittel, von Information von Zugangseigenschaften des Mobiltelekommunikationsnetzwerks, die sich auf eins oder mehrere Mobiltelekommunikationsnetzwerke bezieht;
automatisches Generieren, durch Mittel zum Generieren von Daten zur Auswahl des Netzwerkzugangs, von Daten zur Auswahl von Zugang zum Mobiltelekommunikationsnetzwerk für die Mobiltelekommunikationsvorrichtung, um zumindest auf eins des einen oder der mehreren Mobiltelekommunikationsnetzwerke zuzugreifen, wobei die Daten zur Auswahl von Zugang zum Mobiltelekommunikationsnetzwerk eine Vielzahl von Optionen für mobile Konnektivität für die Mobiltelekommunikationsvorrichtung über das eine oder die mehreren Mobiltelekommunikationsnetzwerke bereitstellen, wobei die Daten zur Auswahl des Zugangs zum Mobiltelekommunikationsnetzwerk aus der Information von Eigenschaften der Mobiltelekommunikationsvorrichtung und aus der Information von Eigenschaften des Zugangs zum Mobiltelekommunikationsnetzwerk abgeleitet sind, wobei die Daten zur Auswahl des Zugangs zum Mobiltelekommunikationsnetzwerk auf dem einen oder den mehreren technischen Merkmalen der Vorrichtung basieren, und
Bereitstellen, durch Mittel zum Generieren von Daten zur Auswahl des Netzwerkzugangs, der Daten zur Auswahl des Zugangs zum Mobiltelekommunikationsnetzwerk an den Benutzer zur Auswahl der Mobiltelekommunikationsvorrichtung.

14. Computerprogrammprodukt, das Befehle umfasst, die ausgelegt sind, wenn ausgeführt, das Verfahren nach Anspruch 13 auszuführen.

## Revendications

1. Un système de génération de données de sélection d'accès à un réseau de télécommunications mobile destinées à un utilisateur de dispositif de télécommunications mobile (22), le système comprenant :
un premier moyen de réception (30) conçu de façon à recevoir des informations de propriétés de dispositif de télécommunications mobile où les informations de propriétés de dispositif de télécommunications mobile comprennent une ou plusieurs caractéristiques techniques du dispositif,
un deuxième moyen de réception (32) conçu de façon à recevoir des informations de propriétés d'accès à un réseau de télécommunications mobile relatives à un ou plusieurs réseaux de télécommunications mobiles, et
un moyen de génération de données de sélection d'accès à un réseau (34) conçu de façon à :
générer automatiquement des données de sélection d'accès à un réseau de télécommunications mobile destinées au dispositif de télécommunications mobile de façon à accéder à au moins un des un ou plusieurs réseaux de télécommunications mobiles, où les données de sélection d'accès à un réseau de télécommunications mobile fournissent une pluralité d'options destinées à une connectivité mobile pour le dispositif de télécommunications mobile par l'intermédiaire des un ou plusieurs réseaux de télécommunications mobiles, où les données de sélection d'accès à un réseau de télécommunications mobile sont dérivées des informations de propriétés de dispositif de télécommunications mobile et des informations de propriétés d'accès à un réseau de télécommunications mobile, où les données de sélection d'accès à un réseau de télécommunications mobile sont basées sur les une ou plusieurs caractéristiques techniques du dispositif, et
fournir des données de sélection d'accès à un réseau de télécommunications mobile à l'utilisateur de dispositif de télécommunications mobile à des fins de sélection.

2. Le système selon la Revendication 1, où les une ou plusieurs caractéristiques techniques du dispositif comprennent un ou plusieurs éléments parmi :
une capacité de technologie d'accès radio,
une capacité de connectivité de télécommunications non mobiles,
une capacité vocale mobile,
une capacité de connectivité sans contact ou en champ proche,
une résolution d'écran,
une capacité de batterie, et
un ou plusieurs mécanismes d'entrée.

3. Le système selon la Revendication 1 ou 2, où les informations de propriétés de dispositif de télécommunications mobile sont fournies par un ou plusieurs éléments parmi l'utilisateur, le dispositif et un fabricant du dispositif.

4. Le système selon la Revendication 3, où les informations de propriétés de dispositif de télécommunications mobile sont fournies par le dispositif et sont générées automatiquement par le dispositif.

5. Le système selon l'une quelconque des Revendications précédentes, comprenant un moyen d'activation conçu de façon à fournir au dispositif des données nécessaires à l'activation d'une option sélectionnée des données de sélection d'accès à un réseau de télécommunications mobile.

6. Le système selon l'une quelconque des Revendications précédentes, où les informations de propriétés de dispositif de télécommunications mobile comprennent en outre un ou plusieurs éléments parmi :
un type de dispositif pour le dispositif de télécommunications mobile,
un modèle de dispositif pour le dispositif de télécommunications mobile, et
un identifiant pour le dispositif.

7. Le système selon l'une quelconque des Revendications précédentes, où le dispositif de télécommunications mobile est un dispositif secondaire associé à un dispositif primaire.

8. Le système selon la Revendication 7, où le dispositif primaire est configuré de façon à communiquer avec le système afin d'exécuter au moins une opération parmi :
la transmission des informations de propriétés de dispositif de télécommunications mobile relatives au dispositif de télécommunications mobile par l'intermédiaire du dispositif primaire, et
la réception des données de sélection d'accès à un réseau de télécommunications mobile au niveau de ou par l'intermédiaire du dispositif primaire.

9. Le système selon la Revendication 7 ou 8, où les données de sélection d'accès à un réseau de télécommunications mobile sont sélectionnables pour l'utilisateur sur un dispositif ou les deux parmi le dispositif primaire et le dispositif de télécommunications mobile.

10. Le système selon l'une quelconque des Revendications précédentes, comprenant en outre le dispositif de télécommunications mobile, où le dispositif de télécommunications mobile est conçu de façon à détecter l'instant où des données de sélection d'accès à un réseau sont souhaitées et à activer le moyen de génération de données de sélection d'accès à un réseau (34) de façon à générer les données de sélection d'accès à un réseau en réponse à cette opération.

11. Le système selon la Revendication 10, où le dispositif de télécommunications mobile est conçu de façon à détecter si des données de sélection d'accès à un réseau sont souhaitées par la détection de la non-disponibilité d'une connexion WiFi pendant que l'utilisateur a besoin d'une connexion de données.

12. Le système selon la Revendication 10 ou 11, où le dispositif de télécommunications mobile est conçu de façon à détecter si le dispositif de télécommunications mobile est passé d'un environnement de revente vers l'utilisateur et à activer le moyen de génération de données de sélection d'accès à un réseau de façon à générer les données de sélection d'accès à un réseau en fonction de cette opération.

13. Un procédé de génération de données de sélection d'accès à un réseau de télécommunications mobile destinées à un utilisateur de dispositif de télécommunications mobile (22), le procédé comprenant :
la réception, par un premier moyen de réception, d'informations de propriétés de dispositif de télécommunications mobile où les informations de propriétés de dispositif de télécommunications mobile comprennent une ou plusieurs caractéristiques techniques du dispositif,
la réception, par un deuxième moyen de réception, d'informations de propriétés d'accès à un réseau de télécommunications mobile relatives à un ou plusieurs réseaux de télécommunications mobiles,
la génération automatique, par un moyen de génération de données de sélection d'accès à un réseau, de données de sélection d'accès à un réseau de télécommunications mobile destinées au dispositif de télécommunications mobile de façon à accéder à au moins un des un ou plusieurs réseaux de télécommunications mobiles, où les données de sélection d'accès à un réseau de télécommunications mobile fournissent une pluralité d'options de connectivité mobile pour le dispositif de télécommunications mobile par l'intermédiaire des un ou plusieurs réseaux de télécommunications mobiles, où les données de sélection d'accès à un réseau de télécommunications mobile sont dérivées des informations de propriétés de dispositif de télécommunications mobile et des informations de propriétés d'accès à un réseau de télécommunications mobile, où les données de sélection d'accès à un réseau de télécommunications mobile sont basées sur les une ou plusieurs caractéristiques techniques du dispositif, et
la fourniture, par un moyen de génération de données de sélection d'accès à un réseau, des données de sélection d'accès à un réseau de télécommunications mobile à l'utilisateur de dispositif de télécommunications mobile à des fins de sélection.

14. Un produit de programme informatique comprenant des instructions configurées de façon à exécuter, lorsqu'elles sont exécutées, le procédé selon la Revendication 13.
